# EUROPÄISCHE PATENTANMELDUNG

(11) **EP 1 655 675 A2**
(43) Veröffentlichungstag der Anmeldung: **10.05.2006**
(21) Anmeldenummer: 05023200.8
(22) Anmeldetag: 25.10.2005
(51) Int. Cl.: G06F 17/28

(54) **Verfahren zum automatisierten Übersetzen eines Dokuments**

(30) Priorität: 25.10.2004 DE 102004052003
(71) Anmelder: Endress + Hauser (Deutschland) Holding GmbH, 79576 Weil am Rhein (DE)
(72) Erfinder: Springhart, Wulf, 79677 Böllen (DE); Steck, Norbert, 79677 Böllen (DE)
(74) Vertreter: Andres, Angelika Maria

(57) **Zusammenfassung**

Bei einem Verfahren zum automatische Übersetzten eines Dokuments, wird das Dokument zuerst nach den längeren Begriffen eines Wörterbuchs durchsucht. Bei erfolgreicher Suche wird der Begriff entsprechend dem Eintrag in der Wörterbucheinrichtung übersetzt.

Somit wird die Gefahr einer unverständlichen Übersetzung von Mehrwort-Begriffen vermieden.

## Beschreibung

Die Erfindung betrifft ein Verfahren zum automatischen Übersetzen eines Dokuments gemäß dem Oberbegriff des Anspruchs 1.

Es sind verschiedene Verfahren zum automatischen Übersetzen von Dokumenten bekannt, die normalerweise als Übersetzungsprogramme auf Personal Computer ablaufen. Hierbei wird das Dokument am Computer eingegeben bzw. eine entsprechende Datei aufgerufen und das Übersetzungsprogramm gestartet. Nach der Übersetzungsprozedur erhält man ein mehr oder wenig gut verständliches Dokument in der gewünschten Fremdsprache (Zielsprache). Ein Problem bei diesen Übersetzungsprogrammen besteht darin, dass einzelne Wörter eines Dokuments jeweils separat übersetzt werden.

Insbesondere bei zusammengesetzten Mehrwort-Begriffen weisen die bekannten Übersetzungsprogramme erhebliche Probleme auf. So ist die korrekte Übersetzung des Begriffs "power supply" in der Automatisierungstechnik "Hilfsenergie". Eine Übersetzung der einzelnen Wörter dieses Mehrwort-Begriffs würde aber zum Ergebnis "Kraft" "Versorgung" kommen, was keinen Sinn macht.

Insbesondere bei Angebots- und Preislisten für technische Produkte z. B. der Automatisierungstechnik treten eine Vielzahl von zusammengesetzten Begriffen auf. Das automatische Übersetzen derartiger Texte führt häufig zu unbrauchbaren Ergebnissen.

Aufgabe der Erfindung ist es deshalb, ein Verfahren zum automatischen Übersetzen eines Dokuments anzugeben, das die oben angegebenen Nachteile nicht aufweist, das insbesondere einfach und kostengünstig durchführbar ist.

Gelöst wird diese Aufgabe durch die im Anspruch 1 angegebenen Verfahrensschritte.

Die wesentliche Idee der Erfindung besteht darin, dass das Dokument zuerst nach langen Einträgen des für die Übersetzung verwendeten Wörterbuchs durchsucht wird. Dadurch wird vermieden, dass wenn der Begriff "power supply" im Dokument vorkommt, mit Kraft Versorgung übersetzt wird.

Insbesondere bei zusammengesetzten Begriffen ist dieses Verfahren deshalb sehr vorteilhaft.

Gemäß einer Weiterentwicklung der Erfindung ist das Verfahren besonders geeignet für die Übersetzung von Angebots- und Preislisten für technische Produkte (wie z. B. Füllstandsmessgeräte, Durchflussmessgeräte, Temperaturmessgeräte etc.).

Da es bei der Übersetzung von Angebots- und Preislisten weniger auf grammatische Feinheiten ankommt, werden die zu übersetzenden Dokumente zuerst vorbearbeitet, um ein besseres Übersetzungsergebnis zu bekommen. Bei dieser Vorbearbeitung werden insbesondere Artikel und Präpositionen, wie "für" und "zum", aus dem Dokument entfernt.

Dadurch werden Übersetzungsprobleme, die durch diese Wörter auftreten können ebenfalls vermieden.

Nachfolgend ist die Erfindung anhand eines in der Zeichnung dargestellten Ausführungsbeispiels näher erläutert.

Es zeigen:

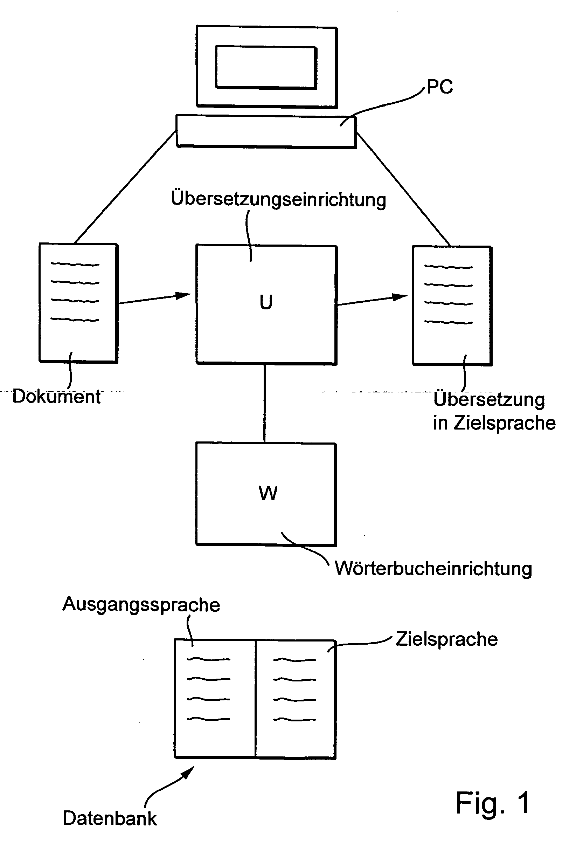

- Fig. 1:: schematische Darstellung des Verfahrens in einem Blockdiagramm;

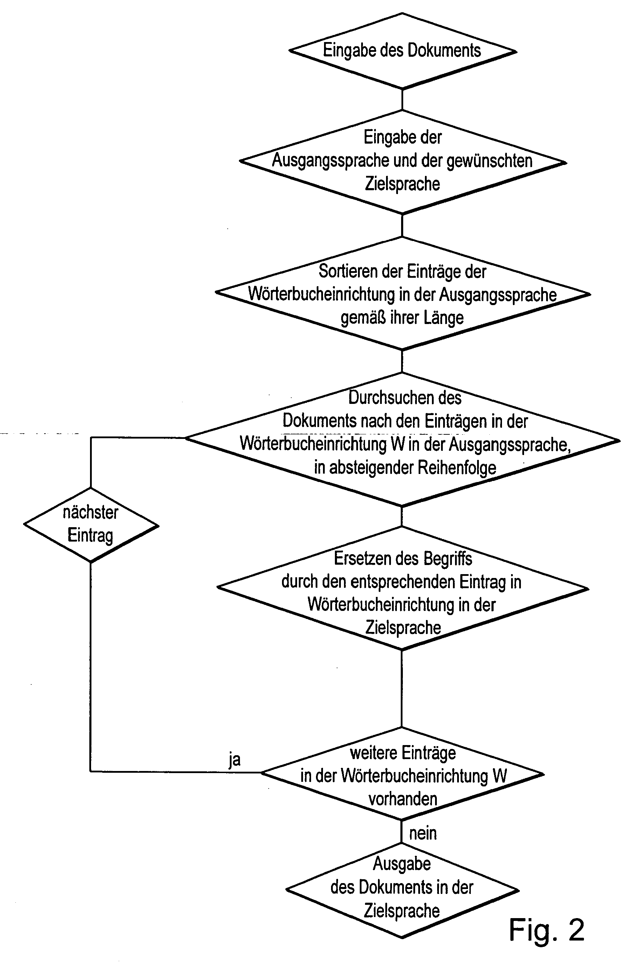

- Fig. 2:: Flussdiagramm der einzelnen Verfahrensschritte.

Das erfindungsgemäße Verfahren ist als Anwendung besonders für Kleinrechner wie Personal Computer, die allgemein als PCs bezeichnet werden, geeignet.
Eine solche Rechnereinheit PC weist eine Eingabeeinheit für das zu übersetzende Dokument auf. Die Eingabeeinheit kann zum Beispiel aus einer Tastatur mit zugehörigem Bildschirm bestehen. Das Dokument kann natürlich auch in der Rechnereinheit PC zum Beispiel als Word- oder Excel-Datei gespeichert sein und aus einem entsprechenden Verzeichnis aufgerufen werden. Das Dokument wird in der Übersetzungseinrichtung U übersetzt und das übersetzte Dokument ausgegeben. Die Ausgabe erfolgt normalerweise auf dem Bildschirm des PC's.

Die Übersetzungseinrichtung U, die im Wesentlichen aus dem eigentlichen Übersetzungsprogramm und der für den Programmablauf notwendigen Hardware der Rechnereinheit PC besteht, ist mit einer Wörterbucheinrichtung B verbunden. Die Wörterbucheinrichtung B besteht im Wesentlichen aus einer Datenbank mit Begriffen in der Ausgangssprache des Dokuments und den entsprechenden Begriffen in der Zielsprache.

Nachfolgend ist das erfindungsgemäße Verfahren näher beschrieben.

Das zu übersetzende Dokument T wird in die Rechnereinheit RE eingelesen. Nach der Eingabe der Ausgangssprache des Dokuments und der gewünschten Zielsprache wird das Dokument nach den in der Wörterbucheinrichtung W abgespeicherten Begriffen in der Ausgangssprache durchsucht. Entscheidend für das erfindungsgemäße Verfahren ist, dass zuerst nach den längeren Einträgen der Wörterbucheinrichtung B gesucht wird.
Bei erfolgreicher Suche wird der im Dokument gefunden Begriff entsprechend dem Eintrag in der Wörterbucheinrichtung B übersetzt.
Somit ist gewährleistet, dass wenn in der Wörterbucheinrichtung B die Begriffe "power supply", "power" und "supply" gespeichert sind, zuerst nach dem Mehrwort-Begriff "power supply" gesucht wird, da dieser Begriff mit 12 Zeichen länger als die jeweiligen Einzelbegriffe power bzw. supply mit jeweils nur 5 bzw. 6 Zeichen ist.

Mit dem erfindungsgemäßen Verfahren ist es somit einfach und schnell möglich, insbesondere technische Texte, wie zum Beispiel Angebots- und Preislisten für technische Produkte, zu übersetzen.

Als besonderes vorteilhaft hat es sich erwiesen, das zu übersetzende Dokument für die Übersetzung entsprechend aufzubereiten. Diese Aufbereitung erfolgt im wesentlichen dadurch, dass Präpositionen wie "für" und "zum" aus dem Dokument entfernt werden. Hier ein englisches Beispiel. Thermometer with threaded process connection, neck and pipe thermowell for general purpose applications and for use in light chemical industry;
wird in
temperature sensor, threaded. Application: General purpose, light chemistry geändert und dann in
Sensore di temperatura, filettato. Applicatione: Impiego generale, chimica leggera bzw.
Temperatursensor verschraubt. Anwendung: Standardanforderungen, Chemie
übersetzt.

Ein entsprechendes vorbereitetes Dokument kann so sehr einfach und schnell in eine Vielzahl von Zielsprachen übersetzt werden, wenn die notwendige Wörterbucheinrichtung entsprechend vorhanden ist.

Es hat sich gezeigt, dass für die Übersetzung von einfachen technischen Dokumenten für Produkte der Automatisierungstechnik eine Wörterbucheinrichtung mit ca. 1500 Einträgen bereits ausreichend gute Ergebnisse liefert. Die Wörterbucheinrichtung muss natürlich auf das Dokument in der Ausgangssprache abgestimmt sein.

Das erfindungsgemäße Verfahren ist besonders in Verbindung mit SAP®-Anwendungen geeignet. SAP® ist eine bekannte betriebswirtschaftliche Software, die vielfach bei den Herstellern von technischen Produkten eingesetzt wird.

Das erfindungsgemäße Verfahren ist für eine Vielzahl von Sprachen geeignet.
Kritisch als Ausgangssprache ist Englisch, da es im englischen üblicherweise keine zusammengeschriebenen Mehrwort-Begriffe gibt. Als Zielsprachen kommen in Betracht alle europäischen Sprachen, Chinesisch, Japanisch, Koreanisch etc.

## Patentansprüche

1. Verfahren zum automatischen Übersetzen eines Dokuments, das auf einer Rechnereinheit PC ausführbar ist,
die eine Wörterbucheinrichtung mit Einträgen in einer Ausgangssprache und
einer Zielsprache und
einer Übersetzungseinrichtung zur Übersetzung des Ausgangstextes in einen Zieltext aufweist,
**gekennzeichnet durch** folgende Verfahrensschritte,
A. Eingabe des Dokuments
B. Eingabe der Ausgangssprache des Dokuments und der gewünschten Zielsprache
C. Sortieren der einzelnen Einträge der Wörterbucheinrichtung in der Ausgangssprache gemäß ihrer Länge
D. Durchsuchen des Dokuments nach dem längsten Eintrag in der Wörterbucheinrichtung W in der Ausgangssprache,
E. falls der Eintrag als Begriff im Dokument erscheint, Ersetzen des Begriffs **durch** den entsprechenden Eintrag in Wörterbucheinrichtung in der Zielsprache
F. Wiederholen der Schritte D und E entsprechend der absteigenden Länge der Einträge bis alle Einträge abgearbeitet sind
G. Ausgabe des Dokuments in der Zielsprache

2. Verfahren nach Anspruch 1, **dadurch gekennzeichnet, dass** die Wörterbucheinrichtung als Einträge vorwiegend technische Begriffe enthält

3. Verfahren nach einem der vorhergehenden Ansprüche, **dadurch gekennzeichnet, dass** die Wörterbucheinrichtung etwa 1500 Einträge enthält

4. Verfahren nach einem der vorhergehenden Ansprüche, **dadurch gekennzeichnet, dass** das Verfahren vorwiegend zur Übersetzung von Preislisten oder Angebotslisten dient.

5. Rechnereinheit bestehend aus einer Eingabeeinheit E für ein Dokument, einer Wörterbucheinrichtung W, die mehrere Einträge in einer Ausgangssprache und einer Zielsprache aufweist und
eine Übersetzungseinrichtung zur Übersetzung des Dokuments in eine Zielsprache,
wobei das Dokument nach Einträgen in der Ausgangssprache der Wörterbucheinrichtung W durchsucht wird und bei erfolgreicher Suche durch den in der Wörterbucheinrichtung W gespeicherten Eintrag in der Zielsprache ersetzt wird und die Suchreihenfolge entsprechend der Länge der Einträge in der Ausgangssprache erfolgt, so dass längere Einträge vorrangig übersetzt werden.
